Europäisches Patentamt

European Patent Office

Office européen des brevets

(11) Veröffentlichungsnummer: **0 513 599 A1**

# EUROPÄISCHE PATENTANMELDUNG

(21) Anmeldenummer: **92107389.6**

(22) Anmeldetag: **30.04.92**

(51) Int. Cl.5: **B01D 53/04**, B05B 53/12

(30) Priorität: **17.05.91 DE 4116252**

(43) Veröffentlichungstag der Anmeldung:
**19.11.92 Patentblatt 92/47**

(84) Benannte Vertragsstaaten:
**AT BE CH DE FR GB IT LI NL**

(71) Anmelder: **LUTRO Luft- und Trockentechnik GmbH**
**Sielminger Strasse 35**
**W-7022 Leinfelden-Echterdingen(DE)**

(72) Erfinder: **Buchmann, Günther**
**Mahlestrasse 17**
**W-7024 Filderstadt 4(DE)**
Erfinder: **Greschner, Rudi**
**Kelterstrasse 4/1**
**W-7445 Bempflingen(DE)**

(74) Vertreter: **Reinhard, Skuhra, Weise**
**Friedrichstrasse 31**
**W-8000 München 40(DE)**

(54) **Anordnung zur Abluftreinigung bei Lackieranlagen.**

(57) Die Erfindung betrifft eine Anordnung zur Abluftreinigung bei Lackieranlagen, mit einer Kabine zum Spritzen und/oder Trocknen von Fahrzeugen, Fahrzeugkarosserien oder dergleichen, sowie einer Filtereinheit, bei welcher ein Frischluftkanal über einen Lufterhitzer an die Kabine geschaltet ist. Von der Kabine führt ein Abluftkanal zur Filtereinheit. Eine Umschalteinrichtung verbindet im Spritzbetrieb den Frischluftkanal über den Lufterhitzer mit der Spritzkabine und den Abluftkanal der Spritzkabine mit der Filtereinheit.

Fig.2

EP 0 513 599 A1

Die Erfindung betrifft eine Anordnung zur Abluftreinigung bei Lackieranlagen, mit einer Kabine zum Spritzen und/oder Trocknen von Fahrzeugen, Fahrzeugkarosserien oder dergleichen und mit einer Filtereinheit, bei welcher ein Frischluftkanal über einen Lufterhitzer an die Kabine geschaltet ist, von welcher ein Abluftkanal zur Filtereinheit führt, mit einer Umschalteinrichtung, die im Spritzbetrieb den Frischluftkanal über den Lufterhitzer mit der Spritzkabine verbindet und den Abluftkanal der Spritzkabine mit der Filtereinheit verbindet.

Die Erfindung schafft eine Anordnung zur Abluftreinigung bei Lackieranlagen, insbesondere zum Lackieren von Fahrzeugen, Karosserieteilen oder dergleichen, die in einer Kabine lackiert und/oder nach dem Lackieren getrocknet werden.

Bei Lackieranlagen wird die Abluft über eine Filtereinheit nach außen geleitet, um Farbpartikel oder dergleichen aus der Abluft herauszufiltern.

Insbesondere bei kombinierten Spritzanlagen, die einen Spritzbetrieb und nachfolgenden Trockenbetrieb gestatten und die vorgenannte Filtereinheit verwenden, werden in dem unmittelbar nach dem Spritzen erfolgenden Trocknungsbetrieb Temperaturen von ca. 60 bis 70°C erreicht. Bei derartigen Temperaturwerten besteht die Gefahr, daß die Abluftreinigung aussetzt, da derartige Temperaturwerte bei Filtermaterialien wie Aktivkohle hinsichtlich der Adsorption nachteilig sind, weil bei Temperaturen von über 35°C ein Desorptionsvorgang beginnen kann.

Bei bekannten Spritz- und Trockenanlagen sind mehrere in einem luftdurchströmten Raum angeordnete rohrförmige oder patronenförmige Filterelemente vorgesehen, durch welche die Abluft hindurchtritt, um anschließend von jedem Filterelement in einen Abluftkanal zu strömen. Das Filtermaterial wie Aktivkohle ist dabei in der Außenwandung der patronenförmigen Filterelemente angeordnet oder bildet die Wandung der rohrförmigen Filterelemente. Hierbei werden alle einzelnen Filterelemente gleichzeitig angeströmt. Nachteilig bei derartigen Filtereinheiten ist, daß die einzelnen Filterelemente nach einer bestimmten Betriebszeit auszuwechseln sind, was mit hohen Kosten durch die einzelnen Filterelemente selbst und den beim Auswechseln entstehenden Aufwand bedingt ist. Derartige Filterelemente haben einen vergleichbar komplizierten Aufbau und erfordern eine separate Fertigung.

Der Erfindung liegt die Aufgabe zugrunde, eine Anordnung der eingangs genannten Art so auszubilden, daß sowohl bei kombinierten Trocken- und Spritzanlagen, als auch bei reinen Trockenanlagen gewährleistet wird, daß im Trockenbetrieb ein Desorptionsvorgang sicher verhindert wird.

Die Erfindung schafft eine Anordnung zur Abluftreinigung bei Lackieranlagen, mit einer Kabine zum Spritzen und/oder Trocknen von Fahrzeugen, Fahrzeugkarosserien oder dergleichen, und mit einer Filtereinheit, bei welcher ein Frischluftkanal über einen Lufterhitzer an die Kabine geschaltet ist, von welcher ein Abluftkanal zur Filtereinheit führt, mit einer Umschalteinrichtung, die im Spritzbetrieb den Frischluftkanal über den Lufterhitzer mit der Spritzkabine und dem Abluftkanal der Spritzkabine mit der Filtereinheit verbindet.

Die erfindungsgemäße Anordnung gewährleistet sowohl bei kombinierten Trocken- und/oder Spritzanlagen als auch bei reinen Trockenanlagen (Farbtrocknungsanlagen), daß im Trockenbetrieb, d. h. während des Trocknens lackierter Teile die Temperatur der die Filtereinheit durchströmenden Abluft einen vorgegebenen Temperaturwert, vorzugsweise von 35 °C, nicht überschreitet. Gemäß der Erfindung wird dies dadurch erreicht, daß die aus der Trocken- und/oder Spritzanlage abgeführte Abluft durch Hinzuführung von Primärluft abgekühlt wird, bevor sie durch die Filtereinheit strömt.

Bei der erfindungsgemäßen Anordnung wird eine Filtereinheit verwendet, die aus mehreren, durch Gleichrichterschichten sandwichartig eingefaßte Filtermaterialschichten, vorzugsweise Aktivkohleschichten oder einem Adsorbens aus biologischem Material besteht, welche die einzelnen Filterelemente ergeben. Die Filterelemente werden vorzugsweise parallel zueinander mit Abluft angeströmt. Vorzugsweise sind die einzelnen Filterelemente kaskadenförmig innerhalb eines kanalförmigen Gehäuses vorgesehen. Bei einer bevorzugten Ausführungsform wird als Filtermaterial eine lose Schüttung aus Aktivkohle benutzt, die sandwichartig zwischen zwei Gleichrichterplatten angeordnet ist, um eine gleichmäßige Durchströmung und eine gute Verteilung der Luft im Filtermaterial zu erreichen.

Gemäß einer weiteren Ausführungsform der Erfindung wird als Filtermaterial ein Adsorbens aus biologischem Material verwendet. Hierfür eignen sich insbesondere poröse, hydrophile Stoffe wie Gasbeton, Blähton, Bimsstein o. dgl. in körniger Form, deren Oberfläche mit einer hydrophoben Schicht aus z.B. Aktivkohle, Adsorptionsharz o. dgl. behaftet ist. Bevor die Beschichtung der Oberfläche mit der hydrophoben Schicht ausgeführt wird, wird der poröse, hydrophile Stoff mit Mikroorganismen beladen. Derartige biologische Filtermaterialien sind aus der CH-Anm. 00277/91-2 bekannt.

Nachfolgend werden bevorzugte Ausführungsformen der Anordnung anhand der Zeichnung zur Erläuterung weiterer Merkmale beschrieben. Es Zeigen:

Fig. 1    eine schematische Schnittansicht durch eine Filtereinheit,

Fig. 2    eine Trocken- und Spritzanlage im Spritzbetrieb, und

Fig. 3    eine Trocken- und Spritzanlage im Trockenbetrieb.

Fig. 4    eine abgewandelte Ausführungsform einer Trocken- und Spritzanlage im Spritzbetrieb, und

Fig. 5    eine abgewandelte Ausführungsform einer Trocken- und Spritzanlage im Trockenbetrieb

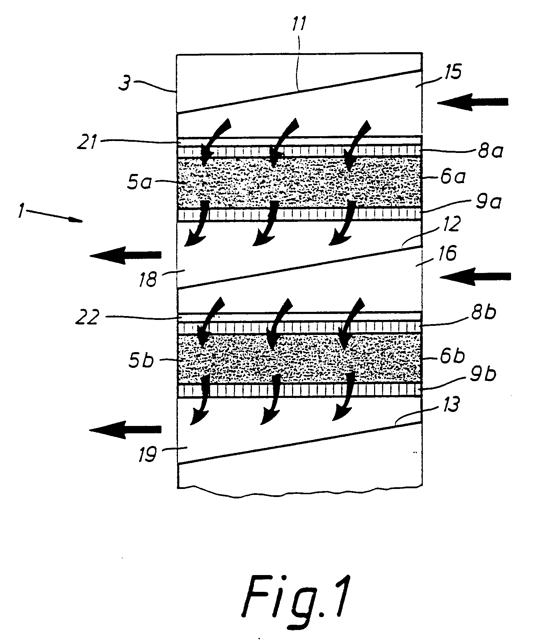

Fig. 1 zeigt eine Teilschnittansicht einer bevorzugten Ausführungsform einer Filtereinheit 1. Die Filtereinheit 1 besteht aus einem mit 3 bezeichneten Gehäuse kanalförmiger Gestalt, in welchem mehrere Filterelemente 5a, 5b usw. kaskadenförmig angeordnet sind. Wie Fig. 1 zeigt, bestehen die Filterelemente 5a, 5b aus einer Schicht 6a, 6b aus einem Filtermaterial, vorzugsweise einer Aktivkohleschicht, die sandwichartig zwischen zwei Gleichrichterplatten 8a, 9a bzw. 8b, 9b angeordnet ist. Die Gleichrichterplatten 8a, 8b, 9a, 9b haben eine wabenförmige Struktur, bestehen vorzugsweise aus Polypropylen und ermöglichen einen Luftdurchtritt zu bzw. von der zugehörigen Filtermaterialschicht 6a, 6b usw..

Die Gleichrichterplatten 8a, 8b usw. haben den Zweck, eine gleichmäßige Durchströmung der jeweiligen Filtermaterialschicht 6a, 6b usw. sowie eine gute Luftverteilung hinsichtlich der Filtermaterialschichten zu gewährleisten. Bei Gleichrichterplatten 8a, 8b usw. mit wabenförmiger Struktur wird dies dadurch erreicht, daß die Luftströmung gleichmäßig über die Oberfläche hinweg verteilt wird und im wesentlichen senkrecht durch die zugehörige Filtermaterialschicht 6a, 6b hindurchtritt.

Innerhalb des Gehäuses 3 sind je Filterelement 5a, 5b einzelne Einheiten konzipiert durch Einsatz von Leitblechen 11, 12, 13 usw., wobei das Filterelement 5a zwischen den Leitblechen 11, 12, das Filterelement 5b zwischen Leitblechen 12 und 13 usw. liegt. Für das Filterelement 5a ist eine Eintrittsöffnung 15, für das Filterelement 5b eine Eintrittsöffnung 16 vorgesehen, usw. Entsprechend sind für das Filterelement 5a auf der zur Eintrittsöffnung 15 gegenüberliegenden Seite eine Austrittsöffnung 18 und für das Filterelement 5b eine Austrittsöffnung 19 vorgesehen, wobei die Eintrittsöffnung 15 bzw. 16 und die zugehörige Austrittsöffnung 18 bzw. 19 vorzugsweise diagonal gegenüber dem jeweiligen Filterelement 5b bzw. 5b angeordnet sind. Auf diese Weise wird erreicht, daß alle Filterelemente 5a, 5b usw. parallel mit Abluft angeströmt werden und die gefilterte Abluft ausgangsseitig dieser Filterelemente 5a, 5b parallel ausströmt.

Die Zahl der einzusetzenden Filterelemente 5a, 5b usw. wird abhängig von dem Abluftvolumen gewählt, welches die Filtereinheit beaufschlagt.

Vorzugsweise wird jede obenliegende bzw. eintrittsseitig im Abluftstrom liegende Gleichrichterplatte 8a, 8b usw. mit einer zusätzlichen Filterschicht 21, 22 versehen, das eine Vorfilterung der Abluft vor deren Eintritt in das Filterelement 5a, 5b usw. vornimmt. Durch die beschriebene Filtereinheit ergibt sich eine insgesamt platzsparende Bauweise gegenüber bekannten Filtereinheiten und es läßt sich wesentlich mehr Filtermaterial auf einem kleinen Raum unterbringen. Hierdurch wird die Standzeit des Aktivkohlefilters wesentich gegenüber bekannten Filtereinheiten erhöht.

Infolge der vorzugsweise losen Schüttung von Filtermaterial bzw. Aktivkohle zwischen den beiden zugehörigen Gleichrichterplatten 8a, 9a usw. läßt sich die Filterschicht auf einfache und zeitsparende Weise dadurch austauschen, daß diese z.B. nach Entfernen der oberen Platte mit einem Staubsauger abgesaugt wird.

Bei der Entsorgung einer kombinierten Trocknungs- und Spritzkabine sind im Spritzbetrieb einerseits und im Trocknungsbetrieb andererseits äußerst unterschiedliche Luftmengen zu bewerkstelligen. Bei einer Standardanlage treten im Spritzbetrieb ca. 21.500 $m^3/h$ auf, wobei die Ablufttemperatur erfindungsgemäß vorzugsweise bei 25°C liegt, während im Trocknungsbetrieb ca. 1.400 $m^3/h$ an Abluftmenge auftritt und die Austrittstemperatur seitens der Anlage bei Temperaturwerten von 65°C bis 90°C liegt. Die Abkühlung der Abluft im Trocknungsbetrieb auf 35°C oder weniger erfolgt auf eine Art und Weise, wie sie nachfolgend noch beschrieben wird.

Bei Auftreten von Kohlenwasserstoffen ist eine Verveilzeit der Abluft im Aktivkohlefilterelement 5a, 5b von mindestens 0,2 s erwünscht. Bei einer Fläche von etwa 24 $m^2$ im Spritzbetrieb und etwa 4 $m^2$ im Trocknungsbetrieb wird erfindungsgemäß eine Schüttungshöhe des Aktivkohlematerials 6a, 6b von etwa 50 mm bevorzugt. Bei einer derartigen Auslegung ist ein Druckabfall von 20 mm Ws zu erwarten.

Die Art der Aktivkohle kann je nach Art des zu erwartenden Lösemittels bzw. deren Konzentration und Zusammensetzung wie z.B. Gemischen aus Toluol, Xylol, Butylacetat o. dgl. unterschiedlich gewählt werden, in Bezug auf das Filtermaterial und/oder dessen Korngröße und Schüttdichte.

Bei einer Auslegung einer Spritz- und Trockenanlage in der vorstehend erwähnten Weise sind die Abluftventilatoren entsprechend groß zu dimensionieren, um den genannten Druckabfall zu kompensieren und um im Abluftkanal eine Strömungsgeschwindigkeit von mehr als 7 m/s zu gewährleisten. Wie nachstehend beschrieben ist, wird für den Trocknungsbetrieb vorzugsweise eine separate bzw. eigene Filtereinheit vorgesehen.

Im folgenden wird eine Spritz- und Trockenanlage in Verbindung mit der erfindungsgemäßen Filtereinheit beschrieben, d.h. eine kombinierte Anlage, die sowohl zum Spritzen als auch zum nachfolgenden Trocknen geeignet ist. Soweit nachfolgend die Anlage für den Spritzbetrieb beschrieben wird, sei darauf hingewiesen, daß sowohl die erfindungsgemäße Filtereinheit als auch die nachfolgend beschriebene Anlage auch nur bei solchen Anlagen anwendbar sind, die ausschließlich für den Spritzbetrieb dienen, d.h. keinen nachfolgenden Trockenbetrieb ermöglichen.

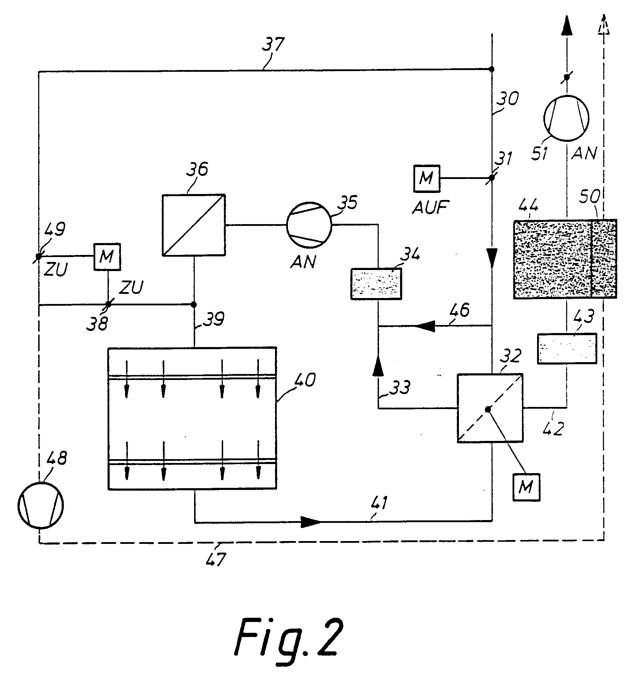

Die in Fig. 2 gezeigte bevorzugte Ausführungsform einer Anlage beinhaltet einen Frischluftkanal 30, der über eine Klappe 31 von Hand oder über einen Motor steuerbar ist. Der Frischluftkanal 30 führt zu einer Umschalteinrichtung 32, von welcher ein Kanal 33 über ein Vorfilter 34 und einen Zuluftventilator 35 an einen Lufterhitzer 36 angeschlossen ist, welcher ausgangsseitig mit einer Kabine 40 verbunden ist, die als Spritz- und Trockenkabine fungiert. Von dem Frischluftkanal 30 führt ein zusätzlicher Kanal für Primärluft über eine steuerbare Klappe 38 zu einem Verbindungskanal 39 zwischen dem Lufterhitzer 36 und der Kabine 40. Die Kabine 40 steht über einen Abluftkanal 41 mit der Umschalteinrichtung 32 in Verbindung, die ihrerseits einen weiteren Ausgang zu einem Kanal 42 aufweist, der über ein Vorfilter 43 mit einer Filtereinheit 44 verbunden ist. Hinter der Filtereinheit 44 ist ein Abluftventilator 51 vorgesehen. Die Filtereinheit 44 hat den in Bezug auf Fig. 1 erläuterten Aufbau.

Hinsichtlich des Einsatzes von Vorfiltern und Ventilatoren können ersichtlich verschiedene Änderungen vorgenommen werden. Wesentlich ist, daß bei der in Fig. 2 gezeigten Anlage im Spritzbetrieb die Klappe 31 geöffnet und die Klappe 38 geschlossen ist, wodurch Frischluft über den Lufterhitzer 36 in die Kabine 40 geführt wird und als Abluft über den Kanal 41 zur Filtereinheit 44 gelangt. Der Primärluftkanal 37 hat hierbei keinerlei Wirkung. Im Spritzbetrieb wird eine große Menge an Frischluft zugeführt und eine Rückführung der Abluft in Form eines Umluftbetriebes zur Kabine 40 ist wegen der in der Abluft befindlichen hohen Anteile von Lösungsmitteln nicht zulässig. Somit wird im Spritzbetrieb die gesamte Abluft der Filtereinheit 44 zugeführt, in welcher die Lösungsmittelbestandteile abgesetzt werden.

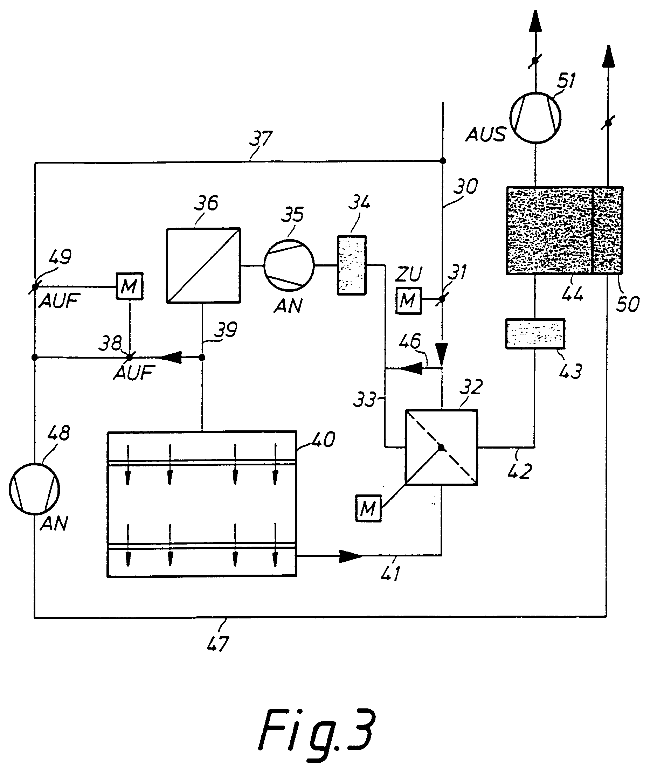

Ist die Anlage nur für den Spritzbetrieb, d.h. nicht zusätzlich für Trockenbetrieb, ausgelegt, erübrigt sich der Einsatz eines Primärluftkanales 37 wie auch die Verwendung umschaltbarer Klappen 31, 38. Weiterhin erübrigt sich das Vorsehen einer mit 46 bezeichneten Bypaßleitung, die ausschließlich zum Zwecke des nachfolgend in Verbindung mit Fig. 3 beschriebenen Trockenbetriebes einzusetzen ist.

Fig. 3 zeigt die komplette Anlage, die sowohl einen Spritzbetrieb als auch einen Trockenbetrieb ermöglicht. Neben dem im Spritzbetrieb nicht erforderlichen Primärluftkanal 37 ist eine derart kombinierte Anlage mit einem zusätzlichen Abluftkanal 47 auszurüsten, der über einen Ventilator 48 und eine Klappe 49 mit dem Primärluftkanal 37 in Verbindung steht. Die Umstelleinrichtung 32 ist im Spritzbetrieb derart eingestellt, daß eine Verbindung zwischen dem Frischluftkanal 30 und dem Kanal 31 zum Lufterhitzer 36 geschaltet ist, während im Trockenbetrieb die Umstelleinrichtung 32 derart umgestellt ist, daß eine Verbindung zwischen dem Kanal 41 und dem Kanal 33 vorliegt. Die Klappe 31 ist im Trockenbetrieb geschlossen, die Klappen 38 und 49 sind im Trockenbetrieb geöffnet. Damit wird die aus der Kabine 40 herausgesaugte Abluft über den Kanal 41 in den Kanal 33 geleitet und durch den Lufterhitzer 36 in den Verbindungskanal 39 geleitet. Somit besteht im Trockenbetrieb im Vergleich zum Spritzbetrieb ein Umluftbetrieb, da im Trockenbetrieb nur ein geringer Anteil von Frischluft zugeführt wird. Dieser geringe Anteil von Frischluft wird im Trockenbetrieb über die Bypaßleitung 46 aus dem Kanal 30 in den Kanal 33 eingegeben, was zur Folge hat, daß ein entsprechender Anteil von Umluft über die offene Klappe 38 und den Ventilator 48 in den Abluftkanal 47 gelangt. Der Abluftkanal 42, der zur Filtereinheit 44 führt, ist praktisch außer Betrieb gesetzt. Damit wird die aus dem Verbindungskanal 39 über die Klappe 38 herausgeleitete Umluft mit Primärluft gemischt, die über den Kanal 37 zugeführt wird, bevor eine derartige Mischung aus Umluft und Primärluft über den Ventilator 48 in den Kanal 47 geleitet wird. Erfindungsgemäß ist vorgesehen, den Abluftkanal 47 an eine zur Filtereinheit 44 separate Filtereinheit 50 anzuschließen, so daß je nach Betriebsart die Filtereinheit 44 im Spritzbetrieb und die Filtereinheit 50 im Trockenbetrieb beaufschlagt wird. Die Filtereinheit 50 hat einen Aufbau, wie er unter Bezugnahme auf Fig.1 beschrieben ist. Die Kapazität der Filtereinheit 50 ist gegenüber derjenigen der Filtereinheit 44 kleiner und entspricht beispielsweise 1/3 der Kapazität der Filtereinheit 44.

Gemäß einer weiteren Abwandlung der Erfindung kann im Trockenbetrieb die Primärluft vom Kanal 37 ausschließlich dazu benutzt werden, die vom Verbindungskanal 39 über die Klappe 38 abgesaugte Umluft durch einen nicht gezeigten Wärmetauscher abzukühlen, d. h. es wird keine Mischung von Primärluft und Umluft vorgenommen, sondern es wird die reine Abluft in der gewünschten Weise auf 35°C oder weniger herabgekühlt, indem die Abluft durch einen Wärmetauscher geleitet wird, der sekundärseitig mit Primärluft beschickt wird.

Wie die Fig. 2 und 3 zeigen, ist ausgangsseitig der Filtereinheit 44 ein Ventilator 51 vorgesehen, der im Spritzbetrieb eingeschaltet, im Trockenbetrieb dagegen ausgeschaltet ist, weil im Trockenbetrieb die Abluft über die Filtereinheit 50 unter Wirkung des Ventilators 48 aus der Anlage abgesaugt wird. Im Spritzbetrieb ist der Ventilator 48 abgeschaltet. Der Ventilator 35 ist in beiden Betriebsarten eingeschaltet.

Die Bypaßleitung 46 kann in die Umschaltvorrichtung 32 integriert sein und braucht nicht, wie in Fig. 2 und 3 gezeigt, außerhalb der Einrichtung 32 angeordnet werden.

Gemäß einer abgewandelten Ausführungsform der Erfindung wird als Filtermaterial ein Biosorbens verwendet, d.h. ein körniges Füllmaterial mit einem hydrophilen Kern und einer hydrophoben Hülle. Der Kern der Körner weist neben einer adsorptiv wirkenden inneren Oberfläche große Poren auf, in welchen Mirkoorganismen angesiedelt werden, bevor die Aktivkohle-Hülle aufgebracht wird. Dieses Füllmaterial adsorbiert Lösungsmittel, wirkt auch als Katalysator zur Umwandlung toxischer Stoffe und bildet einen Schutz für die Mikroorganismen. Dieses biologische Filtermaterial wird anstelle des bei der vorstehend beschriebenen Ausführungsform verwendeten Aktivkohlematerials in den beschriebenen Filterelementen eingesetzt unter Benutzung der Gleichrichterplatten 8a, 8b usw.. Das biologische Filtermaterial wird vorzugsweise als lose Schüttung zwischen den beiden einander zugeordneten Gleichrichterplatten 8a, 9a usw. vorgesehen und läßt sich auf einfache und zeitsparende Weise dadurch austauschen, daß die Filterschicht nach Entfernen der oberen Gleichrichterplatte mit einem Staubsauger abgesaugt wird. Hierdurch erübrigt sich ein Ausbau der Filtermaterialschicht selbst. Durch Vorsehen zusätzlicher, seitlicher Öffnungen läßt sich ein Absaugen der biologischen Filterschicht erreichen ohne den notwendigen Ausbau der oberen Gleichrichterplatte.

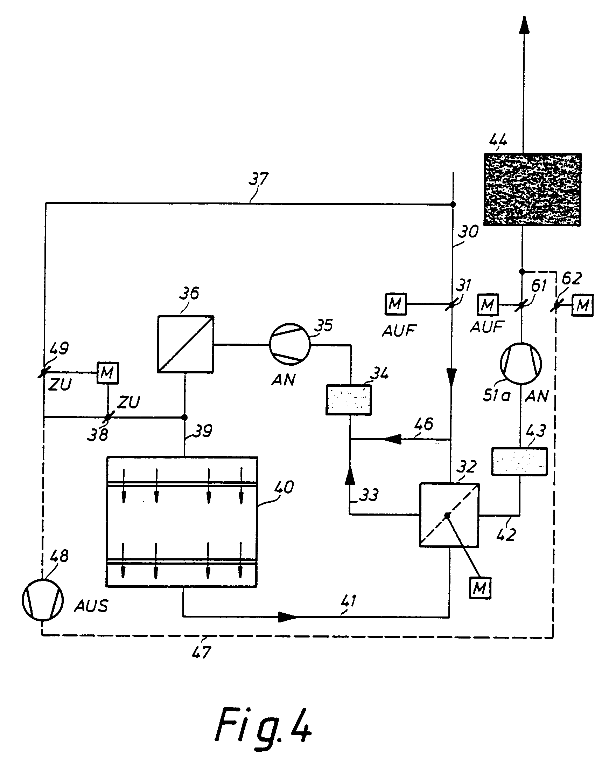

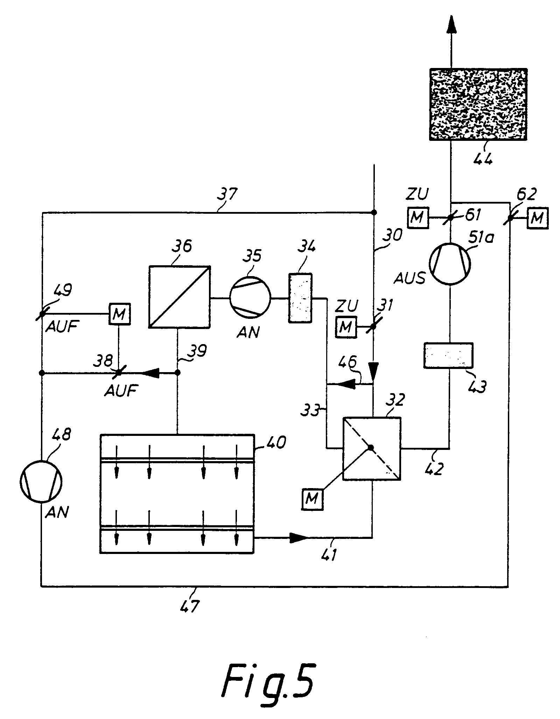

Bei Verwendung des vorstehend beschriebenen biologischen Filtermaterials wird die Anlage zum Spritzen entsprechend Fig. 4 geringfügig gegenüber der Darstellung nach Fig. 2 abgewandelt wie auch die Anlage für den Spritz- und Trockenbetrieb gemäß Fig. 5 geringfügig abgewandelt ist gegenüber der unter Bezugnahme auf Fig. 3 beschriebenen Ausführungsform.

Soweit die Ausführungsform der Anlage nach Fig. 4 mit derjenigen nach Fig. 2 übereinstimmt, wird auf eine nochmalige Beschreibung verzichtet. Bei der Anlage nach Fig. 4 befindet sich hinter dem Filter 43 ein Gebläse 51a, welches ausgangsseitig an das Filter 44 angeschlossen ist. Zwischen dem Gebläse 51a und dem Filter 44 befindet sich ein Stellventil 61, das im Spritzbetrieb geöffnet ist, während das Gebläse 48, das sich im Spritzbetrieb im Aus-Zustand befindet, über ein Stellventil 62 an den Eingang des Filters 44 angeschlossen ist. Im Trockenbetrieb ist das Gebläse 48 eingeschaltet und steht über das Ventil 62 mit dem Filter 44 in Verbindung, während im Trockenbetrieb gemäß Fig. 5 das Stellventil 61 geschlossen ist und das Gebläse 51a ausgeschaltet ist.

Gegenüber der Ausführungsform nach Fig. 2 und 3 ist bei der Anlage nach Fig. 4 und 5 nur ein einziges Filter 44 vorgesehen, das sowohl im Spritzbetrieb wie auch im Trockenbetrieb von dem Abluftkanal beaufschlagt ist. Im Trockenbetrieb wird damit die Abluft über die Filtereinheit 44 unter Wirkung des Ventilators 48 aus der Anlage abgesaugt, während der Ventilator 48 im Spritzbetrieb abgeschaltet ist und der Ventilator 35 in beiden Betriebsarten eingeschaltet ist.

Mit dem erfindungsgemäß verwendeten biologischen Filtermaterial wird während der Tagesschicht, d.h. des Betriebes der Spritz- und Trocknungsanlage Abluft durch das Filter ohne Befeuchtung geleitet. Dabei werden die Lösungsmittel von der im Filtermaterial enthaltenen Aktivkohle gebunden. Am Ende einer Tagesschicht wird bei dieser Ausführungsform mittels einer Zweistoffdüse ein Wassernebel in die Gaseintrittsseite gespritzt. Während der Nacht trocknet die Schicht insgesamt langsam ab und es findet ein biologischer Abbau der Lösemittel statt, so daß das Filterelement am nächsten Tag gereinigt wieder zur Verfügung steht.

Spritz- und Trockenanlagen der beschriebenen Art finden Verwendung in Lackierbetrieben, beispielsweise im der Kfz-Handwerk zum Lackieren und Trocknen von Fahrzeugen.

**Patentansprüche**

1. Anordnung zur Abluftreinigung bei Lackieranlagen, mit einer Kabine (40) zum Spritzen und/oder Trocknen von Fahrzeugen, Fahrzeugkarosserien oder dergleichen, und mit einer Filtereinheit, bei welcher ein Frischluftkanal (30) über einen Lufterhitzer (36) an die Kabine (40) geschaltet ist, von welcher ein Abluftkanal (41; 39, 47) zur Filtereinheit (44 bzw. 50) führt, mit einer Umschalteinrichtung (32), die im Spritzbetrieb den Frischluftkanal über den Lufterhitzer (36) mit der Spritzkabine (40) verbindet und den Abluftkanal (41) der Spritzkabine (40) mit der Filtereinheit (44) verbindet.

2. Anordnung nach Anspruch 1 **dadurch gekennzeichnet,** daß die Umschalteinrichtung (32) im Trockenbetrieb den Abluftkanal (41) der Kabine (40) an den Lufterhitzer (36) anschaltet, daß zwischen dem Frischluftkanal (30) und dem Lufterhitzer (36) eine Bypaßleitung (46) vorgesehen ist zur Zuführung von Frischluft eingangsseitig des Lufterhitzers (36), daß zwischen dem Lufterhitzer (36) und der Kabine (40) eine Abzweigung (38, 39) vorgesehen ist, über die ein Teil der ausgangsseitig des Lufterhitzers (36) austretenden Abluft bzw. Umluft zu einer zweiten Filtereinheit (50) geführt wird, wobei diese Abluft durch einen über einen Kanal (37) zugeführte Primärluft abgekühlt wird.

3. Anordnung nach Anspruch 1 oder 2,
   **dadurch gekennzeichnet,**
   daß die Primärluft der der zweiten Filtereinheit (50) zugeführten Abluft zwecks deren Abkühlung direkt beigemischt wird.

4. Anordnung nach Anspruch 1 oder 2,
   **dadurch gekennzeichnet,**
   daß die Primärluft durch einen Wärmetauscher geleitet wird, der die zur zweiten Filtereinheit (50) geführte Abluft abkühlt.

5. Anordnung nach einem der vorangehenden Ansprüche,
   **dadurch gekennzeichnet, daß** der Kabine (40) ein Zuluftventilator (35) und ein Vorfilter (34) vorgeschaltet sind.

6. Anordnung nach einem der vorangehenden Ansprüche,
   **dadurch gekennzeichnet, daß** Steuereinrichtungen (31, 38, 49) vorgesehen sind, mittels welchen die Beimischung von Primärluft zur Umluft und/oder Abluft steuerbar ist.

7. Anordnung nach wenigstens einem der vorangehenden Ansprüche,
   **dadurch gekennzeichnet, daß** zwischen der Umschalteinrichtung (32) und der Filtereinheit (44) ein weiteres Vorfilter (43) angeordnet ist.

8. Anordnung nach wenigstens einem der vorangehenden Ansprüche,
   **dadurch gekennzeichnet, daß** vor oder hinter der Filtereinheit (44) ein weiterer Ventilator (51; 51a) angeordnet ist.

9. Anordnung nach wenigstens einem der vorangehenden Ansprüche
   **dadurch gekennzeichnet, daß** zwischem dem Frischluftkanal (30) und dem Abluftkanal (47) ein Primärluftkanal (37) vorgesehen ist, wobei die Zuführung von Primärluft aus dem Primärluftkanal (37) in den Abluftkanal (47) durch eine der Steuereinrichtungen (49) steuerbar ist.

10. Anordnung nach wenigstens einem der vorangehenden Ansprüche,
    **dadurch gekennzeichnet, daß** die Filtereinheit aus mehreren Filterelementen besteht, daß jedes Filterelement ein in Form einer Schicht vorgesehenes Filtermaterial (6a, 6b usw.) aufweist, das zwischen zwei Gleichrichterplatten (8a, 8b usw.) angeordnet ist.

11. Anordnung nach Anspruch 10,
    **dadurch gekennzeichnet, daß** die Ablufteintrittsöffnungen zu den Filterelementen (5a, 5b) sowie die Abluftaustrittsöffnungen von den Filterelementen (5a, 5b) im wesentlichen parallel zueinander vorgesehen sind.

12. Anordnung nach Anspruch 10,
    **dadurch gekennzeichnet, daß** die Filterelemente (5a, 5b usw.) kaskadenförmig in einem Gehäuse (3) angeordnet sind.

13. Anordnung nach Anspruch 10,
    **dadurch gekennzeichnet, daß** Leitbleche (11, 12, 13) zur Führung der Abluftströmung zu und von den Filterelementen (5a, 5b) vorgesehen sind.

14. Anordnung nach Anspruch 10,
    **dadurch gekennzeichnet, daß** die Gleichrichterplatten (8a, 8b usw.) wabenförmige Struktur aufweisen und luftdurchlässig ausgebildet sind.

Fig.1

Fig.2

Fig.3

Fig.4

Fig.5

# EUROPÄISCHER RECHERCHENBERICHT

Nummer der Anmeldung

EP    92 10 7389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 331 611 (OTTO OEKO-TECH GMBH & CO.KG)<br><br>* Abbildungen 1-5 * | 1,2,4,6, 8 | B01D53/04<br>B05B53/12 |
| Y | | 7,10-14 | |
| | --- | | |
| X | GB-A-2 024 041 (OTTO DÜRR ANLAGENBAU)<br>* Seite 1, Zeile 54 - Zeile 89 *<br>* Seite 2, Zeile 130 - Seite 3, Zeile 20; Abbildungen 3,6 * | 1,4,7 | |
| | --- | | |
| Y | DE-A-2 928 234 (AB SVENSKA FLÄKTFABRIKEN)<br>* Abbildungen 1-6 * | 10-14 | |
| | --- | | |
| Y | GB-A-469 001 (CARBO-NORIT-UNION)<br>* Ansprüche 1-5; Abbildung 1 * | 7 | |
| | --- | | |
| A | US-A-4 237 780 (TRUHAN)<br>* Ansprüche 1-5; Abbildungen 1-3 * | 1-8 | |
| | --- | | |
| A | US-A-4 565 553 (NOWACK)<br>* Spalte 7, Zeile 30 - Zeile 35; Abbildungen 1-3 *<br>* | 1-9 | |

**RECHERCHIERTE SACHGEBIETE (Int. Cl.5)**

B01D
B05B

Der vorliegende Recherchenbericht wurde für alle Patentansprüche erstellt

| Recherchenort | Abschlußdatum der Recherche | Prüfer |
|---|---|---|
| DEN HAAG | 18 AUGUST 1992 | EIJKENBOOM T. |